# EUROPEAN PATENT APPLICATION

(11) **EP 3 624 294 A1**
(43) Date of publication of application: **18.03.2020**
(21) Application number: 18798291.3
(22) Date of filing: 25.01.2018
(51) Int. Cl.: H02J 7/00

(54) **CHARGING DEVICE, TERMINAL DEVICE, CHARGING METHOD, CHARGING MONITORING METHOD**

(30) Priority: 09.05.2017 CN 201710322892
(71) Applicant: ZTE Corporation, Shenzhen, Guangdong 518057 (CN)
(72) Inventor: WU, Xuebin, Shenzhen Guangdong 518057 (CN)
(74) Representative: Aipex B.V.
(86) International application number: PCT/CN2018/074086
(87) International publication number: WO 2018/205684

(57) **Abstract**

Provided are a charging device, a terminal device, a charging method and a charging monitoring method. The charging method includes: the charging device provided with a rechargeable battery receiving a boost indication signal output from a charged device; the charging device being switched to operate in a boost mode, where the boost mode is an operation mode in which a voltage of the rechargeable battery is boosted and then output to the charged device by the charging device.

## Description

### TECHNICAL FIELD

The present disclosure relates to a direct-current charging technology, for example, to a charging device, a terminal device, a charging method and a charging monitoring method.

### BACKGROUND

A charging device provided with a rechargeable battery, for example a power bank complying with BC1.2/QC2.0/QC3.0 charging protocol of an universal serial bus (USB), is provided with a large-capacity lithium battery pack (the voltage of which is generally 4.2V to 4.4V) inside a case of the power bank. When supplying current to a charged device such as a terminal device, through an internal direct current to direct current (DC-DC) boost circuit (referred to as boost circuit), the voltage of the battery is boosted to 5V complied with the USB specification to output to the charged device (the voltage can be boosted to 9V or 12V, if a quick charge protocol is met). A charger IC of the terminal device transfers, through a buck circuit, the input voltage of 5V, 9V or 12V from the charging device into a voltage (generally 3.6V to 4.6V) suitable for charging for the internal battery. There is a large efficiency loss in the boosting process of the charging device. The boost circuit generally has an efficiency of 80% to 85% at a 2A high current output. In order to reduce costs, the charging device manufactures may choose a cheaper DCDC chip with low efficiency, resulting in a larger efficiency loss. In order to increase the charging efficiency, the general practice is to increase the conversion efficiency of the boost circuit as much as possible. However, the increase of the efficiency is very limited, and the costs will be increased substantially.

Further, in the related art, when being charged by the charging device, the terminal device cannot feedback information regarding charging to the charging device.

### SUMMARY

In view of the above, the present disclosure provides a charging method, including:
a charging device receiving a boost indication signal output from a charged device; and
the charging device being switched to operate in a boost mode, where the boost mode is an operation mode in which a voltage of the rechargeable battery of the charged device is boosted and then output to the charged device by the charging device.

In an optional embodiment, the charging device receives the boost indication signal output from the charged device, and then is switched to operate in the boost mode as follows: the charging device is switched to operate in the boost mode when operating in a non-boost mode and receiving the boost indication signal output from the charged device. The non-boost mode is an operation mode in which the voltage of the rechargeable battery is output to the charged device by the charging device.

The present disclosure further provides a charging method, including:
acquiring information about a first voltage and information about a second voltage, where the first voltage is a voltage of a rechargeable battery in a charging device, the second voltage is a voltage of an internal battery in a charged device;
the charging device boosting the voltage of the rechargeable battery and outputting the boosted voltage of the rechargeable battery to the charged device, when it is determined, according to the information about the first voltage and the information about the second voltage, that the first voltage does not satisfy charging requirements for the internal battery.

A charging device is further provided in the present disclosure. The charging device includes a charging battery, a charging interface, a mode control circuit and a boost circuit. The boost circuit is configured to boost a voltage of the rechargeable battery.

The mode control circuit is connected to the rechargeable battery, the boost circuit and the charging interface. The mode control circuit is configured to output the voltage of the rechargeable battery from the charging interface, or to output the voltage of the rechargeable battery boosted by the boost circuit from the charging interface.

A charging monitoring method is further provided in the present disclosure, including:
a charged device acquiring information about an input voltage from a charging device and information about a voltage of an internal battery in the charged device; and
the charged device outputting a boost indication signal to the charging device via a signal transmission terminal of the charging interface, when the charged device determines that the input voltage from the charging device does not satisfy charging requirements according to the information about the input voltage from the charging device and information about the voltage of the internal battery.

A terminal device is further provided in the present disclosure, including:
a charging interface connected to a charging device; an internal battery; a charging circuit connected to the charging interface and the internal battery;
an acquisition circuit configured to acquire information about an input voltage from the charging device and information about a voltage of the internal battery;
a processing circuit configured to determine whether or not the input voltage from the charging device satisfies charging requirements according to the information about the input voltage from the charging device and the information about the voltage of the internal battery acquired by the acquisition circuit;
a feedback circuit configured to output the boost indication signal to the charging device via a signal transmission terminal of the charging interface when the processing circuit determines that the input voltage from the charging device does not satisfy the charging requirements.

According to the charging device, the terminal device, the charging method and the charging monitoring method provided in the present disclosure, the charged device is capable of feeding back a boost indication signal to the charging device to trigger the charging device to intelligently perform mode switching. Therefore, the charging efficiency is improved while the normal charging is ensured.

### BRIEF DESCRIPTION OF DRAWINGS

FIG.1 is a flow chart of a charging method according to embodiment I.
FIG.2 is a flow chart of a charging monitoring method according to embodiment II.
FIG.3 is a schematic circuit diagram of a charging device and a terminal device according to an embodiment.
FIG.4 shows a circuit diagram according to an example of embodiment V on the basis of FIG.3.
FIG.5 shows a circuit diagram according to another example of embodiment V on the basis of FIG.3.
FIG.6 shows a circuit diagram according to another example of embodiment V on the basis of FIG.3.
FIG.7 shows a circuit diagram according to an example of embodiment VI on the basis of FIG.3.
FIG.8 shows a circuit diagram according to another example of embodiment VI on the basis of FIG.3.
FIG.9 is a block diagram of a terminal device according to embodiment VII.

### DETAILED DESCRIPTION

The following is further described in details with embodiments of the present application with accompanying drawings. It should be noted that, in case of no conflict, the embodiments and features of the embodiments of the present application can be arbitrarily combined with each other.

### Embodiment I

A charging method for a charged device (for example a terminal device such as a mobile phone) by a charging device (such as a power bank) provided with a rechargeable battery is provided in the present embodiment.

The charging device of the present embodiment has two charging modes. One of the charging modes is a non-boost mode, and the other is a boost mode. In the non-boost mode, the charging device is configured to output the voltage of the rechargeable battery to the charged device. In the boost mode, the charging device is configured to boost the voltage of rechargeable battery, and then output the boosted voltage to the charged device.

The charging device of the present embodiment operates in the non-boost mode by default. In other words, once the charging device is powered on, the initial operation mode thereof is the non-boost mode. When being operated in the non-boost mode, if the charging device receives a boost indication signal output from the charged device, the charging device is switched to the boost mode.

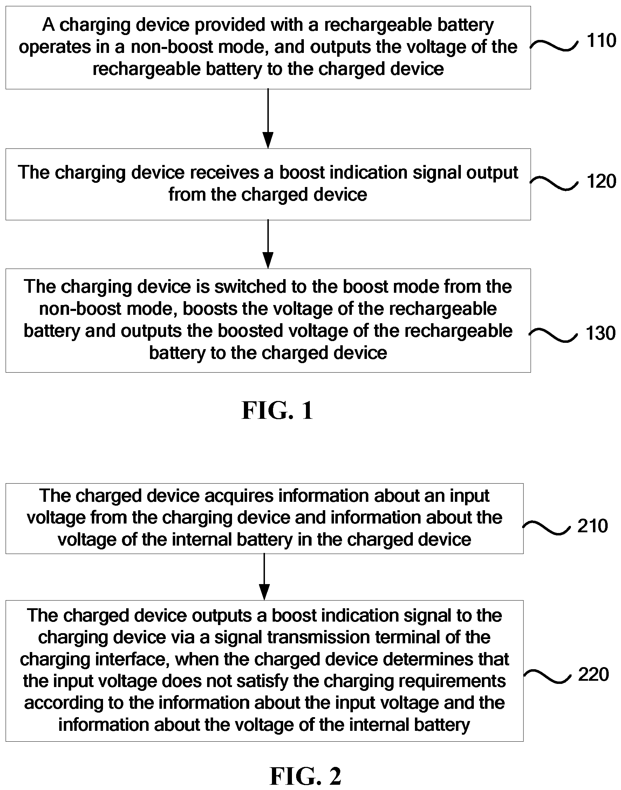

As shown in FIG. 1, the charging method of the present embodiment includes steps described below.

In step 110, a charging device provided with a rechargeable battery operates in a non-boost mode, and outputs the voltage of the rechargeable battery to a charged device.

In the present embodiment, the charging device is connected to the charged device through a USB interface. In another embodiment, the charging device can also be connected to the charged device through a charging interface other than the USB interface, as long as the charging interface is capable of transmitting signals output from the charging device to the charged device.

The USB interface of the present embodiment can be any one of interfaces defined in USB standard such as USB1.1, USB2.1, USB3.0 and USB OTG. A type of the interface, including the interface defined by subsequent version, can be one selected from a group including Type-A, Type-B, Type-C, mini USB and Micro USB. Usually, the charging device and the charged device are provided with a USB female connector, and are mutually connected by plugging a USB cable into the USB female connector. An output voltage of the charging device is usually transferred to the charged device via a VBUS pin of the USB interface.

In step 120, the charging device receives a boost indication signal output from the charged device. In the present embodiment, the boost indication signal is a signal used for indicating that boost is required, that is a signal used for indicating that an input voltage from the charging device does not satisfy the charging requirement (the charging requirement of the embodiment of the present application refers to a requirement for charging an internal battery inside the charged device). When the charged device determines that the input voltage from the charging device does not satisfy the charging requirement, the charged device outputs the boost indication signal to the charging device. In order to properly charging the internal battery inside the terminal device, the input voltage from the power bank should meet a corresponding charging requirement. For example, the input voltage is required to be greater than a sum of the voltage of the internal battery inside the terminal device and a preset threshold voltage, or the input voltage is required to be greater than a preset minimum input voltage or the like. The charging requirement can be set by the terminal manufacturer and is monitored during the charging.

In the present embodiment, the boost indication signal output to the charging device by the charged device can be a level signal, and can be a high level signal or a low level signal. In another embodiment, the boost indication signal can be a protocol data signal, namely an agreed data signal. In this case, the boost indication signal can be referred to as a boost indication message, the charging device requires a processing capability of data reception and parsing, and the boost indication message can be in any agreed format. In another embodiment, the boost indication signal can be a pulse signal, such as a single pulse signal. A pin used to output the pulse signal can output the low level signal or high level signal when the pin does not output the boost indication signal. For the present embodiment, the boost indication signal can be in a form of analog voltage signal, as long as the state of the pin outputting the boost indication signal when the pin outputs the boost indication signal is different from the state of the pin when the pin does not output the boost indication signal and the charging device can recognize the boost indication signal.

In the present embodiment, the boost indication signal can be the high level signal or the low level signal output by the charged device at a pin for signal transmission in the USB interface. Except pins for a power supply and a ground, other pins of the USB interface that can transmit signals, such as D+, D-, ID, CC1, CC2, StdA_SSRX-, StdA_SSRX+, TX1, TX2, RX1, R2, can be used to transmit the boost indication signal. In one example, the boost indication signal can be a low level signal received by the charging device from a D+ pin or a D-pin of the USB interface. The D+ pin or the D- pin can be short-circuited or not short-circuited.

In the embodiment of the present application, as for a pin used for outputting the boost indication signal, if the pin outputs a level signal having a different voltage relative to the earth when the pin outputs the boost indication signal and does not output the boost indication signal, the level signal having a higher voltage relative to the earth is referred to as the high level signal, and the level signal having a lower voltage relative to the earth is referred to as the low level signal. It is not necessary for the high level signal and the low level signal to meet the voltage requirements of transistor-transistor logic (TTL) circuit and a complementary metal oxide semiconductor (CMOS) circuit on a logic high level and a logic low level. In an example, it is assumed that the D+ pin used for outputting the boost indication signal outputs a level signal with a voltage of 0.6V to 0.8V when not outputting the boost indication signal, and outputs a level signal with a voltage of 0V to 0.2V when outputting the boost indication signal, then the level signal of 0V to 0.2V is the low level signal, and the level signal of 0.6V to 0.8V is the high level signal.

In step 130, the charging device is switched to a boost mode from a non-boost mode, and the voltage of the rechargeable battery is boosted and then output to the charged device.

In the present embodiment, when the charging device operates in the non-boost mode, a positive electrode of the rechargeable battery is connected to a voltage output terminal of the charging interface, so that the voltage of the rechargeable battery is output to the charged device. When the charging device is switched to the boost mode, the positive electrode of the rechargeable battery is disconnected from the voltage output terminal, so that a boost circuit operates and an output terminal of the boost circuit is connected to the voltage output terminal. It only needs to arrange a switch in the charging circuit of the charging device that needs to be connected and disconnected and to control it according to the above control logic.

In the present embodiment, the charging device initially operates in the non-boost mode, without performing the boosting process, directly outputs the voltage of the rechargeable battery to the charged device, and performs the boosting after receiving the boost indication signal to satisfy the charging requirement. Therefore, the efficiency loss brought by the boosting is reduced, the output efficiency, charging capability, and the capacity of the charging device is improved. Since the efficiency is improved, the heating of the charging device is reduced, at the same time the risk of explosion of the rechargeable battery in the charging device is reduced, the reliability of the charging device is improved.

### Embodiment II

The present embodiment provides a charging monitoring method of a charged device corresponding to the charging method in embodiment I. The charging device operates in a non-boost mode by default.

In the present embodiment, the charged device can be a terminal device, such as a mobile phone and a tablet computer, that a battery inside the terminal device can be charged by the charging device (such as a power bank) provided with a rechargeable battery. The charging device is connected to the charged device through a USB interface or a charging interface other than the USB interface, as long as the charging interface can transmit a signal output to the charging device from the charged device.

As shown in FIG. 2, the charging monitoring method of the present embodiment includes steps described below.

In step 210, the charged device acquires information about an input voltage from the charging device and information about a voltage of an internal battery of the charged device.

In order to charge the internal battery of the charged device efficiently, the input voltage from the charging device needs to be at least greater than the voltage of the internal battery of the charged device. On the side of the charged device, the input voltage from the charging device (such as the voltage on the VBUS pin when adopting the USB interface) is supplied to a charging chip (also called as a charging circuit), and is processed by the charging chip and then output to the internal battery for charging. There is a corresponding relationship between the input voltage from the charging device and the output voltage of the charging chip or a voltage at an intermediate point (namely any point in the circuit between a voltage input terminal of the charging interface and an input terminal of the charging chip). Therefore, the information about the input voltage from the charging device can be the voltage information acquired at points such as the voltage input terminal of the charging interface, the input terminal and the output terminal of the charging chip or the above intermediate point. In the terminal device provided with the battery such as a mobile phone and a portable android device, the information about the input voltage from the charging device and the information about the voltage of the internal battery of the charged device need to be periodically acquired and monitored, thereby the above acquiring function can be achieved without adding additional components.

In step 220, the charged device outputs a boost indication signal to the charging device via a signal transmission terminal of the charging interface, in response to determining that the input voltage does not satisfy the charging requirements according to the information about the input voltage and the information about the voltage of the internal battery.

There are various ways for determining whether or not the input voltage from the charging device satisfies the charging requirements. For example, when VBAT1-VBAT2 is greater than Vth, it is determined that the input voltage satisfies the charging requirements. When VBAT1-VBAT2 is less than or equal to Vth, it is determined that the input voltage does not satisfy the charging requirements. VBAT1 indicates the input voltage from the charging device, the output voltage of the charging chip or the voltage at the intermediate point. VBAT2 indicates the voltage of the internal battery of the charged device. Vth is a preset threshold voltage, for example 200mV. Vth can be adjusted according to the type of the terminal device or the battery type of the terminal device. For another example, the requirement on the minimum input voltage is added, while adopting the above determination ways. That is, if the input voltage from the charging device is less than a preset minimum input voltage (for example 4.2V), it is also determined that the input voltage does not satisfy the charging requirements. Whether or not the charging requirements are satisfied can also be determined by considering information about a charging current, rather than limiting to the compassion between two voltages.

The boost indication signal of the present embodiment can be the same as the boost indication signal in embodiment I. For example, the boost indication signal can be a high level signal or a low level signal output by the charged device via the signal transmission pin (called a signal transmission terminal) of the USB interface, or can be a pulse signal or a protocol data signal, etc., and will not be described herein. The charged device does not output the boost indication signal when determining that the input voltage satisfies the charging requirements. The states of pin data of the pin used for outputting the boost indication signal are different when outputting the boost indication signal and not outputting the boost indication signal. As for how to determine whether the level signal from the pin used for outputting the boost indication signal is a high level signal or a low level signal, please refer to the description in embodiment I.

A charging identification mechanism is introduced into a USB BC1.2 battery charging specification. After being plugged into the USB interface, the charged device (such as a portable USB device or on-the-go (OTG) device, PD for short) complying with the BC specification loads the voltage signal (VDP_SRC) of about 0.6V to 0.8V on the D+ pin, and then loads a voltage signal of a standard high level on the D+ pin or the D- pin. In the USB BC1.2 specification, the D+ pin and D- pin of the USB charging device are shorted. Therefore, the voltage signal loaded on the D+ pin is detected from the D- pin, thereby identifying whether or not the USB charging device (USB charger) is connected.

In an example of the present embodiment, the charged device loads the above voltage signal on the D+ pin (or D- pin) during the charging identification. After the charging identification is completed, the charged device determines whether or not the input voltage from the charging device satisfies the charging requirements. If satisfied, the voltage signal loaded on the D+ pin or D-pin is remained, or a voltage signal is reloaded on the D+ pin or D-pin, such that the D+ pin or D- pin outputs the high level signal. Thereafter, the charged device periodically determines whether or not the input voltage from the charging device satisfies the charging requirements. When determining that the input voltage from the charging device does not satisfies the charging requirements, the voltage loaded on the D+ pin or the D- pin is removed (for example, the D+ pin or the D- pin is grounded) such that the D+ pin or the D- pin outputs the low level signal served as the boost indication signal. If the charged device determines that the input voltage from the charging device does not satisfy the charging requirements after the charging identification is completed, the voltage signal loaded on the D+ pin or the D- pin is immediately removed. This implementation is compatible with the USB BC1.2 specification, no additional hardware circuit is required and the above processing logic may be realized through software.

In another example of the present embodiment, another pin other than the D+ pin and D- pin on the USB interface, which is capable of transmitting signals, is utilized by the charged device to output the boost indication signal. Before it is determined that the input voltage from the charging device does not satisfy the charging requirements, the pin outputs a high level signal or low level signal. After it is determined that the input voltage does not satisfy the charging requirements, the pin outputs an opposite level signal as the boost indication signal.

In another example of the present embodiment, before the charged device determines whether or not the input voltage satisfies the charging requirements according to the information about the input voltage and the information about the voltage of the internal battery, it is firstly determined whether or not the input voltage acquired from the voltage input terminal of the charging interface is less than a preset threshold value, such as 4.5V. If it is less than the preset threshold value, it indicates that the charging device is in the non-boost mode, and then it is determined whether or not the input voltage satisfies the charging requirements. If the above input voltage acquired from the voltage input terminal of the charging interface is greater than or equal to the preset threshold value, it is not necessary to perform the processing of step 220.

In the present embodiment, the charged device monitors whether or not the input voltage from the charging device satisfies the charging requirements, and indicates the charging device to boost when the input voltage does not satisfy the charging requirements. Therefore, the charging device can intelligently perform mode switching through a signal feedback, making it possible for the charging device to operate in the non-boost mode.

An exemplary charging process based on embodiment I and embodiment II is described below.

In an example, the charging device operates in the non-boost mode by default. Assuming that the charged device determines that the input voltage from the charging device satisfies the charging requirements at an initial stage of the charging, no boost indication signal is output to the charging device, and the charging device continues to operate in the non-boost mode. During the charging process, the voltage of the rechargeable battery in the charging device gradually decreases, and the voltage of the internal battery in the charged device gradually decreases. After a period of time, the charged device finds that the input voltage from the charging device does not satisfy the charging requirements, and outputs the boost indication signal to the charging device. After that, the charging device is switched to the boost mode to supply power to the charged device.

In another example, the charging device operates in the non-boost mode by default. Assuming that the charged device determines that the input voltage from the charging device does not satisfy the charging requirements at the initial stage of the charging, a boost indication signal is immediately output to the charging device. The charging device is switched to the boost mode to supply power to the charged device.

In the two above examples, it is assumed that the charging interface is the USB interface and the boost indication signal is a level signal. When the charging device is switched to the boost mode from the non-boost mode according to the received boost indication signal, the voltage on the data line of the USB interface changes (the transition of the high level and the low level caused by outputting the boost indication signal), while the voltage on a power cable of the USB interface will jump upwards, such as from 4.5V or less to 5V or more. This change may occur when the terminal device is just connected to the charging device, or may occur after the charging device charges the terminal device for a period of time.

After the charged device outputs the boost indication signal, the charging device is switched to the boost mode and the input voltage from the charging device will satisfy the charging requirements. It is not necessary for the charged device to determine whether or not the input voltage from the charging device satisfies the charging requirements, and it is not necessary to remove the boost indication signal output when the level signal is adopted as the boost indication signal.

### Embodiment III

In embodiment I, the charging device operates in the non-boost mode by default; after the charged device is connected to the charging device, the input voltage from the charging device is the voltage of the rechargeable battery in the charging device; the charged device is required to output the boost indication signal to the charging device when the input voltage does not satisfy the charging requirements. However, some terminal devices are incapable of feeding back the boost indication signal to the charging device. If the charging device is used to charge the above terminal device incapable of feeding back the boost indication signal, it may always operate in the non-boost mode and the internal battery in the terminal device can not be fully charged.

Therefore, a charging method is provided in the present embodiment. The difference between the present embodiment and embodiment I is that the charging device operates in the boost mode by default. When the charging device operates in the boost mode, the charging device is switched to the non-boost mode after receiving a non-boost indication signal output from the charged device. The subsequent processing is similar to that described in embodiment I, that is, when the terminal device operates in the non-boost mode, it is switched to the boost mode after receiving the boost indication signal output from the charged device. The definition of the two operation modes, the form and the receiving way of the boost indication signal of the present embodiment are the same as those defined in embodiment I, which are not repeated here. The non-boost indication signal is different from the boost indication signal. They may be different in terms of the output pins or the signals. The difference in terms of the pins means that the non-boost indication signal and the boost indication signal are output from different pins. In this case, both the non-boost indication signal and the boost indication signal can adopt the same signal form, for example, both of them adopt the high level signal or the low level signal. The difference in terms of the signal means that the forms of the signals are different. For example, one of the non-boost indication signal and the boost indication signal adopts the high level signal, while another adopts the low level signal, and both of them can be output from the same pin.

In the present embodiment, the charging device operates in the boost mode by default. When charging the charged device incapable of feeding back the boost indication signal to the charging device, the charging device will not receive the indication signal, thus the charging device remains in the boost mode and can properly charge the charged device. When charging the charged device capable of feeding back the signal, the charging device can be switched to operate in the non-boost mode by receiving the non-boost indication signal, thereby reducing the efficiency loss caused by the boost. The non-boost indication signal output by the terminal device is regarded as information indicating that the terminal device is capable of feeding back signals, so that the charging device is compatible with the terminal device incapable of feed backing the boost indication signal to the charging device.

### Embodiment IV

A charging monitoring method of the charged device is provided in the present embodiment. Corresponding to the charging method in embodiment III, the charging device also operates in the boost mode by default.

The difference between the present embodiment and embodiment II is that the charged device of the present embodiment can output the non-boost indication signal to the charging device in two ways described below.

In way I, after identifying the charging device through the charging identifying process, the charged device outputs the non-boost indication signal to the charging device. In this way, the charged device always outputs the non-boost indication signal to the charging device to tell the charging device that it is capable of feeding back signals. Therefore, the charging device can be switched to the non-boost mode. After receiving the non-boost indication signal, the charging device is switched to operate in the non-boost mode. And if no non-boost indication signal is received, the charging device remains in the boost mode.

In way II, the charged device outputs the non-boost indication signal to the charging device, after identifying the charging device through the charging identifying process and determining that the voltage of the internal battery is less than a preset threshold. Compared with way I, the charged device is required to determine whether or not the voltage of the internal battery is less than the preset threshold, and outputs the non-boost indication signal to the charging device only when the voltage of the internal battery is less than the preset threshold. This is because when the voltage of the internal battery is high, the charging device can not satisfy the charging requirements by adopting the non-boost mode. For example, the threshold can be set according to a general voltage range of the rechargeable in the charging device. For instance, the threshold can be set to around 4V if the voltage range is 4.2V to 4.4V If the voltage of the internal battery is less than 4V, it is considered that the charging device is acceptable to charge the charged device in the non-boost mode, and the non-boost indication signal is output. If the voltage of the internal battery is larger than 4V, it is considered that the charging device is not suitable to operate in the non-boost mode, no non-boost indication signal is output, in this case, the charging device will always operate in the boost mode, and the charged device will not output the non-boost indication signal thereafter. According to this way, since the charged device does not actually acquire the voltage output to the charged device from the charging device in the non-boost mode, the setting of the threshold is relatively important. There may be some deviations between the voltage range on which the setting of the threshold is based and the actual voltage range, but the normal charging will not be affected. In Way II, the non-boost indication signal output from the charged device also may be used to indicate the charging device that the charged device is capable of feed backing signals. As described in embodiment II, the non-boost indication signal is different from the boost indication signal. In one example, the non-boost indication signal is a low level signal output from the D+ pin or the D- pin, while the boost indication signal is a high level signal output from the D+ pin or the D-pin. The D+ pin or the D- pin may also output the high level signal during the charging identifying process. The high level signal and the boost mode defaulted by the charging device are matched, but will not tiger the mode transition like the boost indication signal.

No matter what kind of way is adopted, if the charged device outputs the non-boost indication signal to the charging device, the subsequent processing may adopt the method in embodiment I. That is, the charged device determines whether or not the input voltage from the charging device satisfies the charging requirements according to the information acquired. If it is not satisfied, the charged device outputs the boost indication signal to the charging device. After outputting the boost indication signal, the charged device is not necessary to determine whether or not the input voltage from the charging device satisfies the charging requirements, and is not necessary to remove the level signal output as the boost indication signal.

Based on the charging monitoring method of the present embodiment, when the charging device operating in the boost mode by default charges the terminal device incapable of feeding back signals, the charging device will always operate in the boost mode during the entire charging process. However, when the charging device charges the terminal device capable of feeding back signals, the charging device can realize the mode transition to improve the output efficiency of the power bank.

### Embodiment V

A charging device is provided in the present embodiment. The charging device is a power bank, for example.

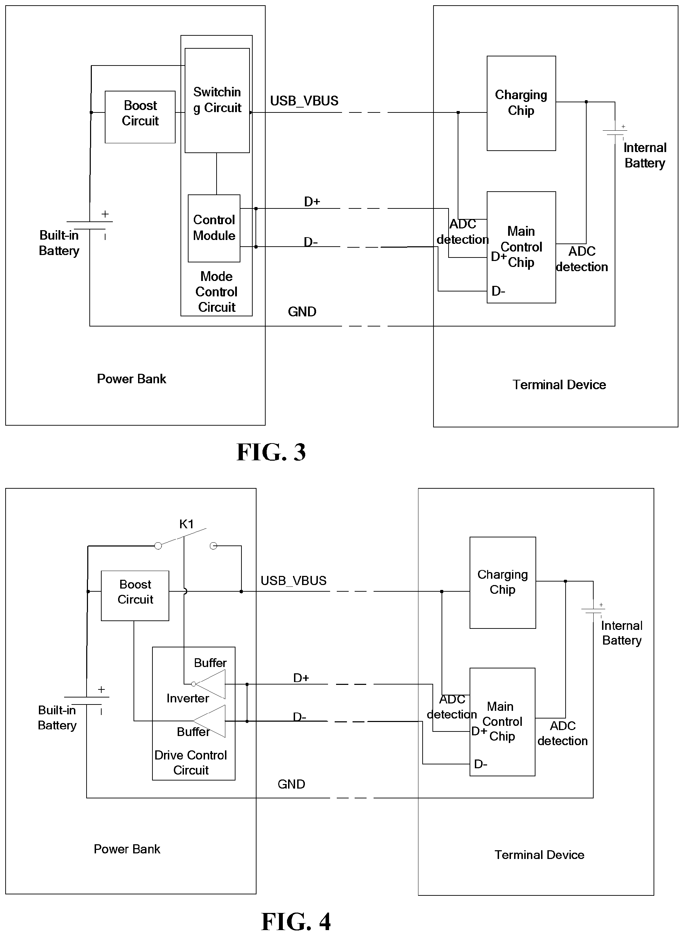

Referring to FIG. 3, the power bank includes a rechargeable battery, a charging interface and a boost circuit. The charging interface is a USB interface. The USB_VBUS pin in FIG. 3 is a pin for connecting to a power cable of the USB interface, and is used as a voltage output terminal to supply power to the charged device. The D+ pin and the D- pin are pins for connecting to data lines of the USB interface, and are short-circuited according to the USB BC1.2 specification (the D+ pin and the D- pin are not short-circuited in some charger). The GND pin is a pin of the USB interface that is grounded. The input terminal of the boost circuit is connected to the positive electrode of the rechargeable battery (such as a built-in battery of the power bank in FIG.3). The output terminal of the boost circuit is connected to the voltage output terminal of the charging device. The boost circuit is used to boost the voltage of the rechargeable battery.

In the present embodiment, a mode control circuit is added on the basis of the above circuit. The mode control circuit is connected to the rechargeable battery, the boost circuit and the charging interface. The mode control circuit is configured to output the voltage of the rechargeable battery from the charging interface when the charging device operates in the non-boost mode, and to output the voltage boosted by the boost circuit from the charging interface when the charging device operates in the boost mode.

As shown in FIG. 3, the mode control circuit of the present embodiment includes a switching circuit and a control module.

The switching circuit is configured to be connected to the rechargeable battery, the boost circuit and the voltage output terminal of the charging interface.

The control module is configured to be connected to the switching circuit and a signal reception terminal of the charging interface. The control module has two control modes: a boost control mode and a non-boost control mode. When the control module is in the non-boost control mode, the control module controls the switching circuit to output the voltage of the rechargeable battery to the voltage output terminal. When the control module is in the boost control mode, the control module controls the switching circuit to output the voltage boosted by the boost circuit to the voltage output terminal. The control module performs the transition of the control mode according to an indication signal received from the signal reception terminal of the charging interface.

In the present embodiment, the control module may be in the non-boost control mode by default. When the control module is in the non-boost control mode, the control module is switched to the boost control mode if the boost indication signal is received from the signal reception terminal, corresponding to embodiment I. In another embodiment, the control module may be in the boost control mode by default. When the control module is in the boost control mode, the control module is switched to the non-boost control mode if the non-boost indication signal is received from the signal reception terminal. When the control module is in the non-boost control mode, the control module is switched to the boost control mode if the boost indication signal is received from the signal reception terminal, corresponding to embodiment III.

In the present embodiment, the charging interface may be a USB interface. The signal reception terminal of the charging interface is the pin for signal transmission in the USB interface (such as the pin for connecting to data lines). The boost indication signal may be the high level signal or the low level signal transmitted on the pin for signal transmission in the USB interface.

In the present embodiment, the switching circuit may adopt analog switches, or other switches driven by an electrical signal to realize the on-off of the circuit, such as a relay. The analog switches of the present embodiment are MOS tubes, and may also be other types of switch such as a TTL switch. The analog switch may be implemented with discrete components or with a cluster circuit. The analog switch is switched on or switched off by applying a high level signal or a low level signal at a control terminal thereof. The voltage requirements of the high level signal and the low level signal depend on the type of the analog switch. For example, for some CMOS tube switches, the requirement for inputting the high level is that Uih is greater than or equal to 0.7V, the requirement for inputting the low level is that Uil is less than or equal to 0.2V. For some TTL switches, Uih is greater than or equal to 2.0V and Uil is less than or equal to 0.8V. The control module can be constituted by a logic circuit, a single chip microcomputer, or an integrated circuit or discrete components circuit capable of receiving information from the terminal device and performing switching control. The control module of the present embodiment is a drive control circuit in the form of the logic circuit. An input terminal of the drive control circuit is connected to the signal reception terminal, while the output terminal is connected to a control terminal of the analog switch. The drive control circuit is used to convert the level signal received from the signal reception terminal as the indication signal to the level signal for controlling the turn on and turn off of the analog switch. The control logic to be implemented has been described above.

FIG.4 to FIG. 6 show several exemplary circuit schematic diagrams of the present embodiment. In these examples, the signal reception terminal of the charging interface is the D+ pin or the D-pin of the USB interface. The boost indication signal is the low level signal received from the D+ pin or the D- pin. The voltage output terminal is the USB_VBUS pin of the USB interface (short for VBUS pin).

### Example I

The switching circuit in FIG. 4 includes a single-way switch K1 connected between the positive electrode of the rechargeable battery and the voltage output terminal. An output terminal of the boost circuit is directly connected to the voltage output terminal. The one-way switch mentioned here is used to realize the on-off of a single loop, and the switch is limited to only have one input terminal and one output terminal. Output terminals of the drive control circuit are respectively connected to a control terminal of K1 and an enable terminal of the boost circuit. When the drive control circuit is in the non-boost control mode, a first control signal is output to the control terminal of K1 to close K1, and a disable signal is output to the enable terminal of the boost circuit. When the drive control circuit is in the boost control mode, a second signal is output to the control terminal of K1 to disconnect K1, and an enable signal is output to the enable terminal of the boost circuit.

In the present example, the terminal device outputs the boost indication signal from the D+ pin or the D- pin. However, due to load capability and so on, the high level signal and the low level signal on the D+ pin or the D- pin cannot be directly used to control the on-off of the analog switch in the charging device. The high level signal and the low level signal output from the D+ pin or D- pin may not be adapted with the high level voltage and the low level voltage needed for controlling the on-off of the analog switch, the phases may be different, and level conversion and phase conversion (such as phase inversion) may be required. Further, it may be necessary to consider requirements such as signal isolation. The drive control circuit is used to solve these problems, realizing one or more functions of increasing load capability, level conversion, phase conversion and signal isolation, as well as other functions. If the voltage of the high level signal on the D+ pin or the D- pin is 0.6V to 0.8V, level conversion can be realized by a comparator (reference voltage can be set to 0.4V to 0.5V) or the like. In another embodiment, if the above problem does not exist, the boost indication signal output from the terminal device can directly control the on-off of the analog switch. In this case, the mode control circuit can only include the switching circuit and does not include the control module.

The drive control circuit shown in FIG. 4 includes two drive units. The first drive unit includes a buffer. The second drive unit includes a buffer and an inverter. The buffers of the first drive unit and the second drive unit in FIG. 4 are respectively arranged, while they may adopt the same buffer. The buffer can increase the drive capability through impedance matching, and can also realize the function of level conversion and signal isolation. However, the drive control circuit is not limited to being realized by the buffer. There is a plurality of discrete components circuits and integrated circuits which can realize the functions such as increasing load capability and level switch, there are also various names, and they can be selected and combined according to the circuit. For the present embodiment, the logic circuit that can realize the above functions of the control module can be referred to as the drive control circuit.

As shown in FIG. 4, the first drive unit receives the signal on the D+ pin, and the output terminal of the first drive unit is connected to the enable terminal of the boost circuit. The second drive unit receives the signal on the D- pin, and the output terminal of the second drive unit is connected to the control terminal of K1. It is assumed that K1 selected is switched on by applying the low level and switched off by applying the high level, the boost circuit is enabled by applying the low level and disabled by applying the high level. Therefore, if the terminal device outputs the high level signal on the D+ pin, the first drive unit will output a high level signal to disable the boost circuit, while the second drive unit will output a low level signal to turn on K1, the power bank will operate in the non-boost mode. On the other hand, if the terminal device outputs the low level signal on the D+ pin, the first drive unit will output a low level signal to enable the boost circuit, while the second drive unit will output a high level signal to turn off Kl, the power bank will operate in the boost mode. The present example adopts the solution of embodiment I in which the power bank operates in the non-boost mode by default and a low level signal is adopted as the boost indication signal. In another example, the solution of embodiment III is adopted, in which the power bank operates in the boost mode by default. In this case, the output terminal of the first drive unit is connected to the control terminal of Kl, the output terminal of the second drive unit is connected to the enable terminal of the boost circuit, and a low level signal is adopted as the non-boost indication signal, a high level signal is adopted as the boost indication signal.

In another example, K1 is switched on by applying a high level and switched off by applying a low level, and the boost circuit can be enabled by a high level and disabled by a low level. In this case, the boost indication signal may be the high level signal. The same control logic can be realized by adjusting at least one of: the arrangement of the inverter in the drive control circuit and the circuit connection relationship of the drive control circuit.

### Example II

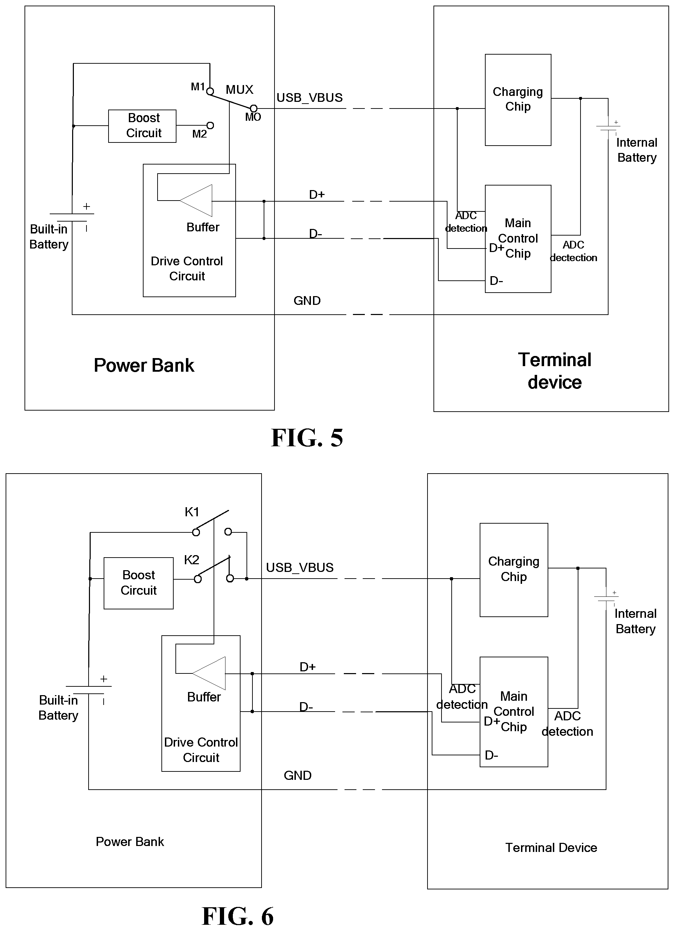

As shown in FIG. 5, the switching circuit of the present example is a multiway switch MUX. A first input terminal M1 of the multiway switch is connected to the positive electrode of the rechargeable battery. A second input terminal M2 of the multiway switch is connected to the output terminal of the boost circuit. An output terminal of the multiway switch is connected to the voltage output terminal. However, the multiway switch is not limited to have two input terminals and one output terminal.

When the drive control circuit of the present example is in the non-boost control mode, a first control signal is output to the control terminal of the switching circuit, so that M1 is connected to M0 and M2 is disconnected from M0. When the drive control circuit is in the boost control mode, a second control signal is output to the control terminal of the switching circuit, so that M1 is disconnected from M0 and M2 is connected to M0, and the boost circuit is in an operation status. The enable terminal of the boost circuit of the present example can always be in an enable status during the charging process. The enable terminal of the boost circuit can also be controlled by the drive control circuit. At this time, when the drive control circuit controls M1 to be connected to M0, the drive control circuit outputs the disable signal to the enable terminal of the boost circuit. When the drive control circuit controls M2 to be connected to M0, the drive control circuit outputs the enable signal to the enable terminal of the boost circuit.

The drive control circuit shown in FIG. 5 is realized by one buffer. When a high level is applied on the control terminal of the multiway switch, M1 is connected to M0 and M2 is disconnected from M0. When a low level is applied on the control terminal of the multiway switch, M1 is disconnected from M0 and M2 is connected to M0. If the terminal device outputs the high level signal on the D+ pin, the drive control circuit outputs the high level signal to the control terminal of the multiway switch so that M1 is connected to M0 and M2 is disconnected from M0, that is, the power bank operates in the non-boost mode. If the terminal device outputs the low level signal on the D+ pin, the drive control circuit outputs the low level signal to the control terminal of the multiway switch so that M2 is connected to M0 and M1 is disconnected from M0, that is, the power bank operates in the boost mode. The present example adopts the solution of embodiment I in which the power bank operates in the non-boost mode by default and the low level signal is adopted as the boost indication signal. In another example, the solution of embodiment III is adopted, in which the power bank operates in the boost mode by default. In this case, an inverter can be added before or after the buffer of the drive control circuit, and the low level signal is adopted as the non-boost indication signal while the high level signal is adopted as the boost indication signal.

### Example III

As shown in FIG. 6, the switching circuit of the present example includes two single-way switches one of which is a switch K1 connected between the positive electrode of the rechargeable battery and the voltage output terminal, and the other is a switch K2 connected between the output terminal of the boost circuit and the voltage output terminal. K1 is switched on by applying a high level and switched off by applying a low level. K2 is switched on by applying a low level and switched off by applying a high level. The drive control circuit is realized by one buffer. It is easy to understand that the circuit is equivalent to the circuit in example II. Those skilled in the art should appreciate similar equivalent designs which are not enumerated here.

Beside the circuits in the above examples, the functions of the drive control circuit can be realized by the discrete components such as a resistor, a capacitor, an integrated operational amplifier, a compactor and a digital logic device. The above examples mainly aim at the power bank device that complies with the USB BC1.2/QC2.0/QC3.0 specification and transmits the feedback signal of the terminal device via the USB D+ and D- data lines. In another example, the USB D+ and D- data lines can be replaced by a USB ID signal line, a USB CC1 or CC2 signal line to realize the signal transmission between the terminal device and the power bank.

In the above examples, all the boost indication signals are level signals. The embodiments of the present application are not limited thereto. In another embodiment, the boost indication signal can also be a pulse signal. In this case, the drive control circuit needs to be redesigned. For example, a trigger is added. The status transition of the output level is triggered by the pulse signal, such that the output levels of the trigger before and after receiving the boost indication signal are different. The mode conversion of the charging device can be realized by combining the drive control circuit of the present embodiment.

The charging device (such as the power bank) of the present embodiment can operate in the non-boost mode, and can be switched to the boost mode according to the indication of the charged device. Therefore, the charging device can realize the effective charging, and improve the output efficiency, the charging capability and capacity of the power bank.

### Embodiment VI

A charging device is provided in the present embodiment. The charging device is a power bank, for example. The charging device of the present embodiment is basically the same as the charging device in embodiment IV, and the differences are described below.

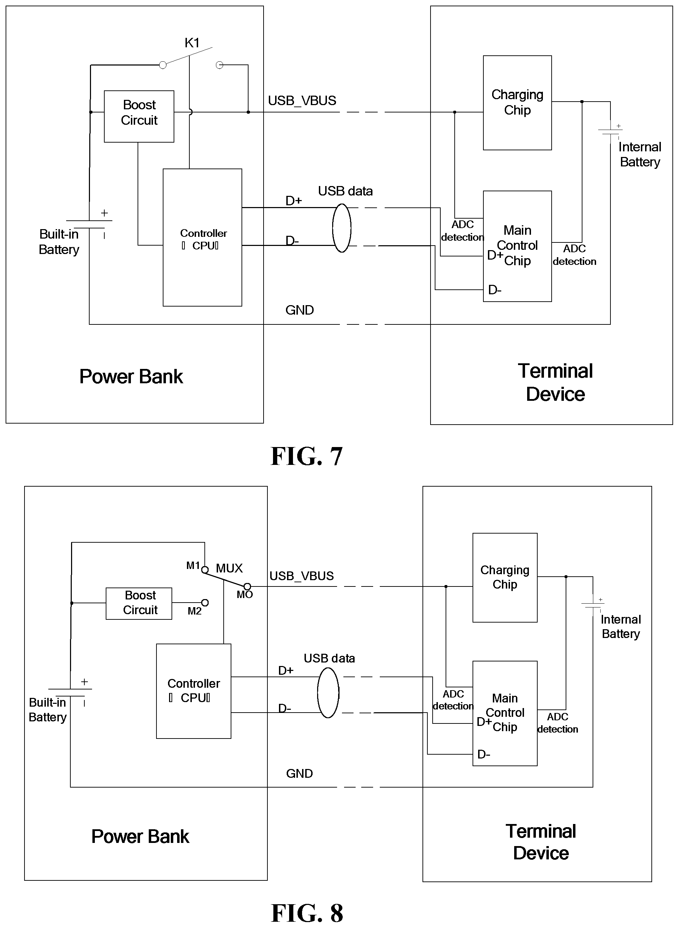

As shown in FIG. 7, the charging device of the present embodiment includes a rechargeable battery (such as a built-in battery of the power bank in FIG.7), a charging interface and a boost circuit. The charging interface of the present embodiment is a USB interface. A signal reception terminal of the charging interface is a pin for signal transmission of the USB interface. Different from embodiment V, the D+ and D- pin are not short-circuited. For example, some power bank may apply a prescribed voltage on the D+ and D- pin so that a specific terminal device connected to the power bank implement the charging identification. Therefore, a dual-mode charging is adopted in the present embodiment for some specific power bank dedicated to charging the above specific terminals.

The power bank of the present embodiment further includes a mode control circuit. The mode control circuit includes a switching circuit and a control module, which is the same as embodiment V. Different from embodiment V, the control module adopts a controller including a CPU. The controller receives a protocol data signal via a pin (such as the D+ pin and the D- pin) for connecting to the data line of the USB interface. Therefore, the charging device of the present embodiment can receive and parse indication message in a protocol data form, such as a boost indication message and a non-boost indication message. These messages can be in any format agreed upon. In the following example, the controller receives message from the D+ pin and the D- pin of the USB interface. While in other examples, the controller can also receive the protocol data signal from the data lines such as StdA_SSRX- and StdA_SSRX+, TX1 and RX1, TX2 and RX2.

In the example shown in FIG. 7, the switching circuit includes a single-way switch K1 connected between the positive electrode of the rechargeable battery and the voltage output terminal. One output terminal of the controller for realizing the mode control is connected to a control terminal of Kl, while another output terminal of the controller is connected to the enable terminal of the boost circuit. In an example, when the controller is in a default status, K1 is controlled to be switched on and the boost circuit is disabled, so that the power bank operates in the non-boost mode. After receiving the boost indication message, K1 is controlled to be switched off and the boost circuit is enabled, so that the power bank is switched to operate in the boost mode. In another example, when the controller is in the default status, K1 is controlled to be switched off and the boost circuit is enabled, so that the power bank operates in the boost mode. After receiving the non-boost indication message, K1 is controlled to be switched on and the boost circuit is disabled, so that the power bank operates in the non-boost mode. If the boost indication message is received again, K1 is controlled to be switched off and the boost circuit is enabled, so that the power bank operates in the boost mode.

In the example shown in FIG. 8, the switching circuit includes a multiway switch MUX. The connection relationship of the MUX is the same as that in FIG. 5. The output terminal of the controller is connected to the control terminal of the MUX. In an example, when the controller is in a default status, M1 and M0 of the MUX are controlled to be connected with each other, and M2 and M0 are controlled to be disconnected from each other, so that the power bank operates in the non-boost mode. After receiving the boost indication message, M2 and M0 of the MUX are controlled to be connected with each other, and M1 and M0 are controlled to be disconnected from each other, so that the power bank is switched to operate in the boost mode. In another example, when the controller is in the default status, M2 and M0 of the MUX are controlled to be connected with each other, and M1 and M0 are controlled to be disconnected from each other, so that the power bank operates in the boost mode. After receiving the non-boost indication message, M1 and M0 of the MUX are controlled to be connected with each other, and M2 and M0 are controlled to be disconnected from each other, so that the power bank operates in the non-boost mode. If the boost indication message is received again, M2 and M0 of the MUX are controlled to be connected with each other, and M1 and M0 are controlled to be disconnected from each other, so that the power bank operates in the boost mode. The boost circuit can always be in an enable status, and can also be controlled by the controller. That is, the boost circuit is enabled when M2 and M0 are controlled to be connected with each other, and the boost circuit is disabled when M1 and M0 are controlled to be connected with each other.

When the control module adopts the controller including the CPU, the switching circuit can also adopts two single-way switches or other types of switches. When adopting the controller as the control module, the control logic for the switching circuit is the same as that when adopting the logic circuit as the control module.

The charging device of the present embodiment can improve the output efficiency, the charging capability and the capacity of the power bank.

### Embodiment VII

The present embodiment provides a terminal device which can cooperate with the charging device of embodiment V or embodiment VI to realize the dual-mode charging.

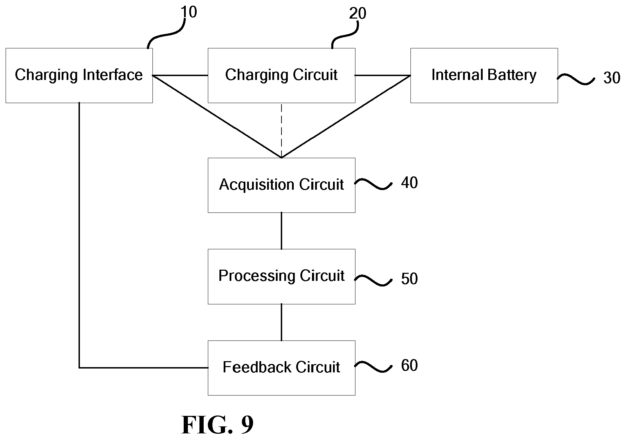

FIG. 9 is a block diagram of the terminal device of the present embodiment. The terminal device includes: a charging interface 10 configured to be connected to a charging device; an internal battery 30; a charging circuit 20 (such as a charging chip) connected to the charging interface 10 and the internal battery 30; an acquisition circuit 40 configured to acquire information about an input voltage from the charging device and information about an voltage of the internal battery; a processing circuit 50 configured to determine whether or not the input voltage satisfies charging requirements according to the information about the input voltage and the information about the voltage of the internal battery acquired by the acquisition circuit, and a feedback circuit 60 configured to output a boost indication signal to the charging device via a signal transmission terminal of the charging interface when the processing circuit determines that the input voltage does not satisfy the charging requirements.

In the present embodiment, the acquisition circuit 40, the processing circuit 50 and the feedback circuit 60 are all integrated on a control chip, such as a main control chip, of the terminal device. The acquisition circuit 40 can periodically acquire information though an analog-to-digital converter (ADC). The information about the input voltage from the charging device can be acquired from a voltage input terminal of the charging interface 10, and can also be required from an input terminal, an output terminal or an intermediate point of the charging circuit 20. The processing circuit 50 can be implemented through executing a corresponding program by a CPU, or can be implemented by a logic circuit. The determination of whether or not the input voltage satisfies the charging requirements is as shown in embodiment II, which are not repeated. The feedback circuit 60 can use a voltage source or a current source of the control chip to load voltage or current on the signal transmission terminal of the charging interface 10 to output the boost indication signal. The terminal device of the present embodiment does need to add hardware, and can compare the two voltage information and output the corresponding signal via the software. In another embodiment, the part or all of the above circuit can be implemented by an integrated circuit or a discrete component circuit independent of the control chip.

In the present embodiment, the charging interface 10 includes a universal serial bus USB interface. The boost indication signal may be a high level signal or a low level signal output from a pin for signal transmission of the USB interface, and may also a signal in other forms, such as a pulse signal or a protocol data signal. In an example, the boost indication signal is a low level signal output from a D+ pin or a D- pin of the USB interface.

In an example of the present embodiment, the processing circuit 50 may be configured to identify whether or not an external device connected to the USB interface is the charging device (i.e. performing a charging identification process) by loading a voltage signal on the D+ pin or the D-pin of the USB interface. The feedback circuit 60 may also be configured to keep the voltage signal loaded on the D+ pin or the D- pin, or reload the voltage signal on the D+ pin or the D-pin when the processing circuit 50 determines that the input voltage satisfies the charging requirements, such that the D+ pin or the D- pin outputs the high level signal. Further, the feedback circuit 60 may be configured to remove the voltage signal loaded on the D+ pin or the D- pin, such that the D+ pin or the D- pin outputs the low level signal as the boost indication signal.

In another embodiment, the processing circuit 50 may also be configured to identify whether or not the external device connected to the charging interface 10 is a charging device (i.e. performing the charging identification process). Before the feedback circuit 60 outputs the boost indication signal to the charging device and after the processing circuit 50 identifies that the external device connected to the charging interface is the charging device, the processing circuit 50 outputs the non-boost indication signal to the charging device, that is, the non-boost indication signal is transmitted in way I in embodiment IV. Alternatively, the processing circuit 50 is also configured to identify whether or not the external device connected to the charging interface 10 is a charging device, and to determine whether or not the voltage of the internal battery is less than a preset threshold. Before the feedback circuit 60 outputs the boost indication signal to the charging device, when the processing circuit 50 identifies that the external device connected to the charging interface 10 is a charging device and determines that the voltage of the internal battery 30 is less than the preset threshold, the non-boost indication signal is output to the charging device. That is, the non-boost indication signal is transmitted in way II in embodiment IV In an example, the high level signal output from the D+ pin or the D- pin is adopted as the boost indication signal, and the low level signal output from the D+ pin or the D- pin is adopted as the non-boost indication signal. The circuit diagram of the terminal device of the present embodiment is shown in FIG. 3 to FIG.8. The terminal device includes the USB interface as the charging interface, the internal battery and the charging chip connecting to the charging interface and the internal battery. The VBUS pin of the USB interface can be regarded as the voltage input terminal, which is used to receive the input voltage from the charging device. The input voltage charges the internal battery after being processed by the charging chip. The GND pin is grounded. The D+ pin and the D- pin are pins for connecting to data lines, which can transmit the protocol data and also transmit the level signal. The main control chip (such as a single chip microcomputer) of the terminal device can be integrated with the above acquisition circuit, the processing circuit and the feedback circuit. The terminal device of the present embodiment can cooperate with and be charged by the charging device having two operation modes. The mode conversion of the charging device can be realized by the signal feedback, and thus finishing the charging process. It can improve the output efficiency, charging capability and capacity of the power bank.

The following is the description of one exemplary process during which the power bank in embodiment V charges the terminal device in embodiment VII.

Referring to FIG. 4, the power bank operates in the non-boost mode by default. That is, K1 is switched on and the boost circuit is disabled, so that the voltage of the rechargeable battery is output. When a terminal device (such as a mobile phone) is connected to the power bank, the main control chip of the terminal device detects the input voltage (equal to the voltage of the rechargeable battery of the power bank) of the USB VBUS pin, and executes the USB BC1.2 protocol. After identifying that the power bank is connected, the voltage value VBAT1 on the USB VBUS and the voltage value VBAT2 of the internal battery in the terminal device are periodically acquired to determine whether or not VBAT 1-VBAT2 is greater than the set threshold voltage Vth. If VBAT1-VBAT2>Vth, the USB D+ pin at the side of the terminal device outputs a high level signal. The high level signal may be the voltage signal of 0.6∼0.8V or 1.2 V loaded on the D+ pin during the charging identification, or may be a reloaded voltage signal. After the high level signal reaches the power bank, the load capability is enhanced by the drive control circuit. The switch K1 is switched on and the boost circuit is disabled. The power bank continues to operate in the non-boost mode and outputs the voltage of the rechargeable battery. And the main control chip of the terminal device continues to determine whether or not VBAT1-VBAT2>Vth. If the main control chip detects VBAT1-VBAT2 ≤ Vth (whether the terminal device is just connected to the power bank, or the power bank is charging the terminal device), the low level signal is output on the USB D+ pin as the boost indication signal. After the low level signal reaches the power bank, the load capability is enhanced by the drive control circuit. The switch K1 is switched off and the boost circuit is enabled. The power bank is switched to the boost mode, and the output voltage of the power bank rises to 5V or the above.

If the terminal device in embodiment VII is charged by the power bank in embodiment VI, the charging process is different from the charging process in the above example. Specifically, when the main chip of the terminal device determines that VBAT1-VBAT2>Vth, the main chip can output or not output a notification message for indicating the power bank to maintain the current operation mode. When the controller at the side of the power bank receives no message or receives the notification message, the power bank continues to operate in the non-boost mode. When the main control chip of the terminal device determines that VBAT1-VBAT2>Vth is not true, it will output a boost indication message in the form of protocol data on the USB D+ pin and D- pin. After the controller of the power bank receives the boost indication message, the switch K1 is switched off and the boost circuit is enabled, so that the power bank is switched to the boost mode. Taking a power bank of 20000mAh as an example, the following is a comparative description on the improvement of the charging efficiency provided by the present embodiment.

It is assumed that a power bank of 20000mAh is used to charge a mobile phone of 5000mAh, the charging current is 2A. When the battery of 5000mAh is charged to 4V, VBAT1<VBAT2+Vth (where Vth=200mV). According to the relationship between the battery capacity and the voltage of the battery, when the voltage of a 4.2V battery reaches 4V, the battery generally reaches about 80% of its battery capacity, that is, 4000mAh as for a battery of 5000mAh. As for an ordinary power bank, it is required to raise the battery voltage of the power bank to 5V, and to step down 5V to the battery charging voltage in the terminal device, the overall efficiency is 75%. Therefore, if the terminal device is required to be charged to 4000mAh, the power bank need to output 5333mAh (=4000/0.75). However, in the present embodiment, when the voltage of the internal battery of the terminal device is 4V or less, the power bank directly outputs the battery voltage. The efficiency loss caused by the boost circuit does not exist. In the terminal device, the efficiency of the step down DCDC of the charging chip is 90%. The power bank only need to output the capacity of 4444mAh (=4000/0.9). Compared to the ordinary power bank, the method of the present disclosure can save the capacity of about 889mAh when charging the terminal device of 5000mAh.

### Embodiment VIII

The present embodiment provides a charging method. The charging method includes:
acquiring information about a first voltage and information about a second voltage, where the first voltage is the voltage of a rechargeable battery in a charging device, and the second voltage is the voltage of an internal battery in a charged device; and
in response to determining that the first voltage does not satisfy charging requirements according to the information about the first voltage and the information about the second voltage, the charging device boosting the voltage of the rechargeable battery and outputting the boosted voltage of the rechargeable battery to the charged device.

The above charging method can be implemented by adopting the solutions of the above embodiments. That is, the charged device acquires the information about the first voltage and the information about the second voltage, determines whether or not the first voltage satisfies the charging requirements according to the information about the first voltage and the information about the second voltage, then outputs an indication signal (boost indication signal or non-boost indication signal) to the charging device. The charging device is subjected to the mode conversion according to the indication signal.

However, in the present embodiment, the information about the first voltage and the information about the second voltage are acquired by the charging device. That is, the charging device acquires information about the first voltage (that is, the voltage of the rechargeable battery) and receives information, sent from the charged device, about the voltage of the internal battery in the charged device.

In the present embodiment, the charging device operates in the non-boost mode by default. After being connected to the charged device, the charging device receives the information about the voltage of the internal battery periodically sent from the charged device, determines whether or not the voltage of the rechargeable battery satisfies the charging requirements according to the information about the voltage of the rechargeable battery acquired and the information about the voltage of the internal battery. The determination method in embodiment II may be used. For example, it is determined whether or not VBAT1-VBAT2>Vth is true, where Vth is a preset threshold voltage. If it is satisfied, the charging device continues to operate in the non-boost mode. If it is not satisfied, the charging device is switched to operate in the boost mode so that the voltage of the rechargeable battery is boosted and output to the charged device. After being switched to operate in the boost mode, the charging device can notify the charged device to stop sending the information about the voltage of the internal battery.

In another optional embodiment, the charging device operates in the boost mode by default. After being connected to the charged device, the charging device receives the information about the voltage of the internal battery periodically sent from the charged device, determines whether or not the voltage of the rechargeable battery satisfies the charging requirements based on the information about the voltage of the rechargeable battery acquired and the information about the voltage of the internal battery. If it is satisfied, the charging device is switched to operate in the non-boost mode, the voltage of the rechargeable battery is output to the charged device. In the non-boost mode, the charging device continues to receive the information about the voltage of the internal battery periodically sent from the charged device, and determines whether or not the voltage of the rechargeable battery satisfies the charging requirements. After a period time, if it is determined that the voltage of the rechargeable battery does not satisfy the charging requirements, the charging device is switched to the boost mode so that the voltage of the rechargeable battery is boosted and output to the charged device. After being switched to operate in the boost mode, the charging device can notify the charged device to stop sending the information about the voltage of the internal battery.

The charging device of the present embodiment can add a switching circuit and a control module like the foregoing embodiment. The control module can be implemented by a controller with CPU. The switching circuit can adopt the switching circuit in any one of the forging embodiments and the examples. AD+ pin and a D- pin can be not short-circuited when adopting a USB interface. The information about the voltage of the internal battery in a form of protocol data, sent by the charged device, such as the voltage value, is received via the D+ pin and the D- pin. The control module also needs to acquire the information about the voltage of the rechargeable battery such as the voltage value, to implement the control logic. The control module can control the switching circuit in the same manner as that in foregoing embodiments. When the switch in the switching circuit adopts the analog switch, the analog switch can be switched on and switched off by the corresponding level signal, and the boost circuit can also be enabled and disabled, such that the charging device can operate in the non-boost mode or the boost mode.

Those skilled in the art should understand that all or some of the steps, systems, functional modules/units in the devices in the methods disclosed above may be implemented to be software, firmware, hardware and suitable combinations thereof. In a hardware implementation manner, the division of the functional modules/units mentioned above may not necessarily correspond to the division of physical components. For example, a physical component can have a plurality of functions, or one function or step can be executed by the cooperation of several physical components. Some of or all physical components can be implemented to be the software executed by a processor, such as a central processor, a digital signal processor or microprocessor, or can be implemented to be the hardware, or can be implemented to be an integrated circuit, such as an application specific integrated circuit. Such software can be distributed on a computer readable medium. The computer readable medium can include a computer storage medium (or non-transitory medium) and a communication medium (or transitory medium). The term 'computer storage medium' includes a volatile and nonvolatile, removable and non-removable medium implemented in any method or technology for storing information (such as a computer readable instruction, a data structure, a program module or other data). Computer storage medium includes, but is not limited to, RAM, ROM, EEPROM, flash memory or other memory technology, CD-ROM, digital versatile disc (DVD), or other optical disc storage, magnetic cartridge, magnetic tape, magnetic disk storage, or other magnetic storage device, or any other medium that is used to store the desired information and can be accessed by the computer. In addition, the communication medium normally includes the computer readable instruction, the data structure, the program module or other data in a modulated data signal such as a carrier wave or other transport mechanism, and can includes other information delivery medium.

### INDUSTRIAL APPLICABILITY

According to the charging device, the terminal device, the charging method and the charging monitoring method provided in the present disclosure, the charged device is capable of feeding back a boost indication signal to the charging device to trigger the charging device to intelligently perform mode switching. Therefore, the charging efficiency is improved while the normal charging is ensured.

## Claims

1. A charging method, comprising:
a charging device receiving a boost indication signal output from a charged device, and being switched to operate in a boost mode, wherein the boost mode is an operation mode in which a voltage of a rechargeable battery in the charging device is boosted and then output to the charged device by the charging device.

2. The charging method according to claim 1, wherein the charging device receiving the boost indication signal output from the charged device and being switched to operate in the boost mode comprises:
when operating in a non-boost mode and receiving the boost indication signal output from the charged device, the charging device is switched to operate in the boost mode, wherein the non-boost mode is an operation mode in which the voltage of the rechargeable battery is output to the charged device by the charging device.

3. The charging method according to claim 1 or 2, wherein before the charging device receiving the boost indication signal output from the charged device,
the charging device operates in the non-boost mode by default, or
the charging device operates in the boost mode by default, after receiving a non-boost indication signal output from the charged device, the charging device is switched to operate in the non-boost mode.

4. The charging method according to any one of claims 1 to 3, wherein the boost indication signal is a level signal, a pulse signal or a protocol data signal.

5. The charging method according to any one of claims 1 to 3, wherein the boost indication signal is a high level signal or a low level signal received by the charging device from a pin used for signal transmission of an universal serial bus, USB, interface.

6. The charging method according to any one of claims 1 to 3, wherein the boost indication signal is a low level signal received by the charging device from a D+ pin or a D- pin of an universal serial bus, USB, interface.

7. The charging method according to any one of claims 1 to 3, wherein the boost indication signal is output to the charging device from the charged device when the charged device determines that an input voltage from the charging device does not satisfy charging requirements.

8. A charging method, comprising:
acquiring information about a first voltage and information about a second voltage, wherein the first voltage is the voltage of a rechargeable battery in a charging device, and the second voltage is the voltage of an internal battery in a charged device, and
the charging device boosting the voltage of the rechargeable battery and outputting the boosted voltage to the charged device when it is determined, according to the information about the first voltage and the information about the second voltage, that the first voltage does not satisfy charging requirements for the internal battery.

9. The charging method according to claim 8, wherein acquiring information about a first voltage and information about a second voltage comprises: the charging device acquiring the information about the first voltage, and receiving the information about the second voltage sent from the charged device;
the charging device boosting the voltage of the rechargeable battery and outputting the boosted voltage to the charged device when it is determined, according to the information about the first voltage and the information about the second voltage, that the first voltage does not satisfy charging requirements for the internal battery comprises: the charging device boosting the voltage of the rechargeable battery and outputting the boosted voltage to the charged device when the charging device determines, according to the information about the first voltage and the information about the second voltage, that the first voltage does not satisfy charging requirements for the internal battery;
wherein before the charging device determines that the first voltage does not satisfy the charging requirements for the internal battery, the method further comprises: outputting the voltage of the rechargeable battery to the charged device.

10. A charging monitoring method, comprising:
a charged device acquiring information about an input voltage from a charging device and information about a voltage of an internal battery in the charged device, and
the charged device outputting a boost indication signal to the charging device via a signal transmission terminal of a charging interface when the charged device determines, according to the information about the input voltage and the information about the voltage of the internal battery, that the input voltage from the charging device does not satisfies charging requirements.

11. The charging monitoring method according to claim 10, wherein the boost indication signal is a low level signal output by the charged device from a D+ pin or a D- pin of an universal serial bus, USB, interface;
wherein the charging monitoring method further comprises:
when the charged device determines, according to the information about the input voltage and the information about the voltage of the internal battery, that the input voltage from the charging device satisfies the charging requirements, the charged device keeping a voltage signal loaded on the D+ pin or the D- pin during charging identification; or the charged device reloading a voltage signal on the D+ pin, so that the D+ pin outputs a high level signal; or the charged device reloading a voltage signal on the D- pin, so that the D- pin outputs the high level signal; and
when the charged device determines that the input voltage from the charging device does not satisfy the charging requirements, the charged device removing the voltage signal loaded on the D+ pin, so that the D+ pin outputs a low level signal as the boost indication signal; or the charged device removing the voltage signal loaded on the D- pin, so that the D- pin outputs the low level signal as the boost indication signal.

12. The charging monitoring method according to claim 10 or 11, wherein before the charged device outputs the boost indication signal to the charging device, the method further comprises:
the charged device outputting a non-boost indication signal to the charging device after identifying the charging device through a charging identification process; or
the charged device outputting the non-boost indication signal to the charging device, when the charged device identifies the charging device through the charging identification process and determines that the voltage of the internal battery is less than a preset threshold.

13. A charging device, comprising a rechargeable battery, a charging interface, a mode control circuit and a boost circuit, wherein the boost circuit is configured to boost a voltage of the rechargeable battery;
wherein the mode control circuit is connected to the rechargeable battery, the boost circuit and the charging interface, and the mode control circuit is configured to output the voltage of the rechargeable battery from the charging interface, or to output the voltage of the rechargeable battery boosted by the boost circuit from the charging interface.

14. The charging device according to claim 13, wherein the mode control circuit comprises:
a switching circuit configured to be connected to the rechargeable battery, the boost circuit and a voltage output terminal of the charging interface; and
a control module configured to be connected to the switching circuit and a signal reception terminal of the charging interface, wherein when the control module is in a non-boost control mode, the control module controls the switching circuit to output the voltage of the rechargeable battery from the voltage output terminal; when the control module is in a boost control mode, the control module controls the switching circuit to output the voltage of the rechargeable battery boosted by the boost circuit from the voltage output terminal; wherein, the control module is configured to perform a control mode conversion according to an indication signal received from the signal reception terminal of the charging interface.

15. The charging device according to claim 14, wherein the control module is in the non-boost control mode by default, and is switched to the boost control mode when receiving a boost indication signal from the signal reception terminal; or
the control module is in the boost control mode by default, and is switched to the non-boost control mode when receiving a non-boost indication signal from the signal reception terminal; the control module is switched to the boost control mode when the control module is in the non-boost control mode and receives the boost indication signal from the signal reception terminal.

16. The charging device according to claim 14 or 15, wherein a switch in the switching circuit comprises an analog switch;
wherein the control module comprises a drive control circuit, an input terminal of the drive control circuit is connected to the signal reception terminal, an output terminal of the drive control circuit is connected to a control terminal of the analog switch, and the drive control circuit is configured to convert a level signal received from the signal reception terminal as the indication signal to a level signal used for controlling the analog switch to be switched on or switched off.

17. The charging device according to claim 16, wherein
the switching circuit further comprises a signal-way switch connected between a positive electrode of the rechargeable battery and the voltage output terminal, an output terminal of the boost circuit is connected to the voltage output terminal;
wherein the output terminal of the drive control circuit is connected to a control terminal of the signal-way switch and an enable terminal of the boost circuit, wherein when the drive control circuit is in the non-boost control mode, the drive control circuit outputs a first control signal to the control terminal of the signal-way switch to switch on the signal-way switch, and outputs a disabled signal to the enable terminal of the boost circuit; when the drive control circuit is in the boost control mode, the drive control circuit outputs a second control signal to the control terminal of the signal-way switch to switch off the signal-way switch, and outputs an enabled signal to the enable terminal of the boost circuit.

18. The charging device according to claim 16, wherein
the switching circuit further comprises a multiway switch, and a first input terminal M1 of the multiway switch is connected to a positive electrode of the rechargeable battery; a second input terminal M2 of the multiway switch is connected to an output terminal of the boost circuit; an output terminal M0 of the multiway switch is connected to the voltage output terminal;
wherein when the drive control circuit is in the non-boost control mode, the drive control circuit outputs a first control signal to a control terminal of the switching circuit to connect M1 to M0 and disconnect M2 from M0; and when the drive control circuit is in the boost control mode, the drive control circuit outputs a second control signal to the control terminal of the switching circuit to disconnect M1 from M0 and connect M2 to M0, and the boost circuit is controlled to be in an operation status.

19. The charging device according to claim 14 or 15, wherein
a switch in the switching circuit comprises an analog switch;
the control module comprises a controller, wherein an input terminal of the controller is connected to the signal reception terminal, an output terminal of the controller is connected to a control terminal of the analog switch, wherein after receiving protocol data as the indication signal from the signal reception terminal, the controller outputs a level signal used for controlling the analog switch to be switched on or switched off to the control terminal of the analog switch.

20. A terminal device, comprising:
a charging interface connected to a charging device;
an internal battery;
a charging circuit connected to the charging interface and the internal battery;
an acquisition circuit configured to acquire information about an input voltage from the charging device and information about a voltage of the internal battery;
a processing circuit configured to determine, according to the information about the input voltage and the information about the voltage of the internal battery acquired by the acquisition circuit, whether or not the input voltage satisfies charging requirements; and
a feedback circuit configured to output a boost indication signal to the charging device via a signal transmission terminal of the charging interface when it is determined by the processing circuit that the input voltage does not satisfy the charging requirements.

21. The terminal device according to claim 20, wherein
the charging interface comprises an universal serial bus, USB, interface;
the boost indication signal comprises a level signal, a pulse signal or a protocol data signal which are output from a pin for signal transmission of the USB interface.

22. The terminal device according to claim 20, wherein
the charging interface comprises an universal serial bus, USB, interface;
the processing circuit is further configured to identify whether or not an external device connected to the USB interface is the charging device through loading a voltage signal on a D+ pin or a D-pin of the USB interface;
the feedback circuit is further configured, when it is determined by the processing circuit that the input voltage from the charging device satisfies the charging requirements, to keep the voltage signal loaded on the D+ pin or the D- pin, or to reload the voltage signal on the D+ pin such that the D+ pin outputs a high level signal, or to reload the voltage signal on the D- pin such that the D- pin outputs the high level signal; and
the feedback circuit is further configured, when it is determined by the processing circuit that the input voltage from the charging device does not satisfies the charging requirements, to remove the voltage signal loaded on the D+ pin such that the D+ pin outputs a low level signal as the boost indication signal, or remove the voltage signal loaded on the D- pin such that the D- pin outputs the low level signal as the boost indication signal.

23. The terminal device according to claim 20, wherein
the processing circuit is further configured to identify whether or not an external device connected to the charging interface is the charging device; wherein before the feedback circuit outputs the boost indication signal to the charging device and after the processing circuit identifies that the external device connected to the charging interface is the charging device, a non-boost indication signal is output to the charging device; or
the processing circuit is further configured to identify whether or not the external device connected to the charging interface is the charging device, and to determine whether or not the voltage of the internal battery is less than a preset threshold; wherein before the feedback circuit outputs the boost indication signal to the charging device, the non-boost indication signal is output to the charging device when the processing circuit identifies that the external device connected to the charging interface is the charging device and determines that the voltage of the internal battery is less than the preset threshold.
